# EUROPÄISCHE PATENTSCHRIFT

(11) **EP 3 516 323 B1**
(45) Veröffentlichungstag und Bekanntmachung des Hinweises auf die Patenterteilung: **28.07.2021**
(21) Anmeldenummer: 17776958.5
(22) Anmeldetag: 14.09.2017
(51) Int. Cl.: G01B 5/012, G01B 11/00

(54) **TASTFUEHLER**
TOUCH PROBE
PALPEUR

(30) Priorität: 23.09.2016 DE 102016117980
(43) Veröffentlichungstag der Anmeldung: 31.07.2019
(73) Patentinhaber: M&H Inprocess Messtechnik GmbH, 88289 Waldburg (DE)
(72) Erfinder: ARMBRUST, Matthias, 88239 Wangen (DE)
(74) Vertreter: Otten, Roth, Dobler & Partner mbB Patentanwälte
(86) Internationale Anmeldenummer: PCT/EP2017/073207
(87) Internationale Veröffentlichungsnummer: WO 2018/054760

(56) Entgegenhaltungen:
- DE-A1- 3 246 252
- DE-A1-102009 030 929
- DE-C1- 4 325 744
- US-A- 5 222 304

## Beschreibung

Die Erfindung betrifft einen Tastfühler für eine Werkzeugmaschine, sowie eine Werkzeugmaschine mit einem solchen Tastfühler.

### Stand der Technik

Tastfühler der einleitend genannten Art sind bereits vielfach bekannt. Ein bekannter Tastfühler, wie die DE 43 25 744 C1, die DE 32 46 252 A1, die US 5 222 304 A und DE 10 2009 030929 A1, umfasst ein Gehäuse, an welchem über eine Lagermechanik ein Taststifthalter zur Anordnung eines Taststifts bewegbar gelagert ist. DE 43 25 744 C1 offenbart außerdem eine elastische Membran, welche zwischen einer Taststiftaufnahme und einem Taststiftlager angeordnet ist und diese verbindet. Bekannte Tastfühler umfassen als Lagermechanik ein Drei-Punkt-Lager bzw. eine Drei-Punkt-Auflage, mittels welchem der Taststifthalter bewegbar am Gehäuse gelagert ist. Ein bekannter Nachteil des Drei-Punkt-Lagers ist, dass es eine ungleiche Bewegungscharakteristik des Taststifthalters radial um eine Längsachse des Taststiftelements aufweist. Diese markante Hebelcharakteristik des Drei-Punkt-Lagers führt zu einer ungleichen Messcharakteristik für Bewegungen des Taststifthalters in radialer Richtung um die Längsachse des Taststifts und damit zu einer Messungenauigkeit.

### Aufgaben und Vorteile der Erfindung

Der Erfindung liegt die Aufgabe zugrunde, einen verbesserten Tastfühler bereitzustellen. Insbesondere einen Tastfühler bereitzustellen, welcher eine verbesserte Messcharakteristik aufweist.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einem Tastfühler mit einem Gehäuse und einer Taststifthalterung aus, wobei die Taststifthalterung ein Taststiftlager und eine Taststiftaufnahme umfasst, wobei die Taststiftaufnahme dazu vorgesehen ist, einen Taststift aufzunehmen, wobei die Taststifthalterung mittels des Taststiftlagers am Gehäuse beweglich gelagert ist.

Bevorzugterweise ist die Taststifthalterung mittels des Taststiftlagers über eine Ruhelagemechanik am Gehäuse beweglich gelagert. Die Ruhelagemechanik ist beispielsweise als eine bekannte Drei-Punkt-Auflage ausgeführt. Im nicht ausgelenkten Zustand befindet sich die Taststifthalterung insbesondere in einer Ruheposition, z.B. einer sogenannten Nulllage, an der Ruhelagemechanik.

Der wesentliche Aspekt der Erfindung ist nun darin zu sehen, dass die Taststifthalterung eine Membran aufweist, wobei die Membran zwischen der Taststiftaufnahme und dem Taststiftlager der Taststifthalterung ausgebildet ist, wobei die elastische Membran die Taststiftaufnahme mit dem Taststiftlager verbindet, sodass eine Messempfindlichkeit des Tastfühlers bei einer radialen Antastung aus jeder Richtung gleich ist. Hierdurch ist eine Messcharakteristik des Tastfühlers verbessert, insbesondere eine radiale Messcharakteristik. Die Messcharakteristik des Tastfühlers lässt sich insbesondere bei einer radialen Antastung, z.B. in X- und/oder Y-Richtung, des Tastfühlers durch die Membran optimieren. Eine radiale Antastung des Tastfühlers ist als Antastung senkrecht zu einer Längsachse L2 des Gehäuses bzw. zu einer Längsachse L1 eines angeordneten Taststifts zu sehen.

Im nicht ausgelenkten Zustand der Taststiftaufnahme, bzw. des an der Taststiftaufnahme anordenbaren Taststifts, befindet sich bevorzugterweise die Taststiftaufnahme und/oder die Membran in einer Ruheposition an der Taststifthalterung.

Auch ist es von Vorteil, dass die Membran die Taststiftaufnahme mit dem Taststiftlager, insbesondere ausschließlich, verbindet.

Die Membran ist als eine elastische Membran, z.B. hautartig, plättchenartig und/oder scheibenartig, z.B. als ein insbesondere dünnes, flaches Biegeelement, ausgebildet. Hierdurch ist eine Messempfindlichkeit des Tastfühlers bei einer radialen Antastung aus jeder Richtung gleich. Beispielsweise wird zum Auslösen eines Messsignals in einer radialen Antastrichtung immer eine gleiche Messkraft benötigt.

Auch ist es von Vorteil, dass die Membran derart vorhanden ist, dass eine Messung des Tastfühlers nicht durch Vibrationen einer Bearbeitungs- und/oder Messmaschine, an welcher der Tastfühler anordenbar ist, gestört ist. Vorteilhafterweise dämpft die Membran eine Bewegung oder Kraft der Taststiftaufnahme, welche durch äußere Vibrationen verursacht ist. Eine äußere Vibration kann beispielsweise durch eine Achsbewegung einer Achse der Bearbeitungsmaschine, an welcher der Tastfühler z.B. angeordnet ist, verursacht sein. Insbesondere besitzt die Membran eine z.B. vergleichsweise große Dicke, um äußere Vibrationen zu dämpfen.

Die Dicke der Membran ist z.B. in einem Bereich zwischen 0,1 mm und 5 mm vorhanden, beispielsweise in einem Bereich zwischen 0,2 mm und 4 mm oder zwischen 0,3 mm und 3 mm oder zwischen 0,4 mm und 2 mm. Die Dicke der Membran ist vorteilhafterweise 0,5 mm, 1mm, insbesondere 1,5 mm.

Weiter wird vorgeschlagen, dass die Membran rotationssymmetrisch ausgebildet ist.

Beispielsweise ist die Membran in Form einer ringförmigen Scheibe, als sogenannte Dünnstelle, vorhanden. Vorteilhafterweise ist die Membran als Ring oder als Ringscheibe ausgebildet. Denkbar ist auch, dass die Membran stegartig, z.B. speichenartig vorhanden ist. Insbesondere ist die ringscheibenförmige und/oder speichenartige Membran zwischen der Taststiftaufnahme und dem Taststiftlager angeordnet und verbindet die Taststiftaufnahme mit dem Taststiftlager. Die insbesondere ringscheibenförmige Membran ist z.B. mit einer radial innenliegenden Seite mit der Taststiftaufnahme verbunden und mit einer radial außenliegenden Seite mit dem Taststiftlager. Durch die rotationssymmetrisch vorhandene Membran besitzt die Taststiftaufnahme, insbesondere der Tastfühler, eine gleichmäßige radiale Antastcharakteristik.

Als vorteilhaft erweist sich auch, dass die Membran derart ausgebildet ist, dass sie sich bei einer Bewegung der Taststiftaufnahme relativ zum Gehäuse verformt. Hierdurch ist eine Messempfindlichkeit des Tastfühlers vorteilhaft verbessert. Insbesondere ist die Membran aus einem vergleichsweise weichen Material ausgebildet.

Insbesondere verformt sich die Membran bei einer Bewegung der Taststiftaufnahme in eine radiale Richtung, wobei eine radiale Richtung als eine Richtung senkrecht zu einer Längsachse L1 der Taststifthalterung bzw. zu einer Längsachse der Taststiftaufnahme zu sehen ist. Eine Bewegung der Taststiftaufnahme in radialer Richtung ist z.B. eine Bewegung in X- und/oder Y-Richtung. Bspw. wird die Membran bei einer Bewegung der Taststiftaufnahme gestaucht und/oder gedehnt. Denkbar ist allerdings auch, dass die Membran sich bei einer axialen Bewegung der Taststiftaufnahme, z.B. in Z-Richtung, verformt.

Als vorteilhaft erweist sich auch, dass die Membran derart vorhanden ist, dass sie sich nach einer Verformung wieder entformt. Die Membran kehrt beispielsweise wieder in ihren Ausgangszustand, die Ruheposition zurück, insbesondere wird damit auch die Taststiftaufnahme in ihre Ruheposition zurück bewegt. Bevorzugterweise kehrt die Membran in ihre Ruheposition zurück, sobald keine Kraft mehr auf die Membran einwirkt, insbesondere durch die Taststiftaufnahme. Die Membran besitzt vorteilhafterweise eine Formgedächtnisfunktion.

In einer vorteilhaften Modifikation des Tastfühlers entkoppelt die Membran eine Bewegung der Taststiftaufnahme von einer Bewegung der Ruhelagemechanik bzw. des Taststiftlagers.

Vorteilhafterweise verformt sich die Membran bei einer Bewegung der Taststiftaufnahme bevor das Taststiftlager bewegt wird. Die Membran ist beispielsweise dazu ausgelegt eine vergleichsweise große Antastbewegung bzw. Antastkraft der Taststiftaufnahme auf das Taststiftlager zu übertragen. Bei einer vergleichsweise großen Antastbewegung bzw. Antastkraft der Taststiftaufnahme verformt sich somit z.B. zunächst die Membran, um anschließend die Bewegung der Taststifthalterung auf das Taststiftlager zu übertragen. Bei einer vergleichsweise kleinen Antastbewegung der Taststiftaufnahme bzw. bei einer vergleichsweise kleinen Antastkraft, welche auf die Taststiftaufnahme wirkt, verformt sich hingegen insbesondere ausschließlich die Membran, das Taststiftlager verbleibt vorteilhafterweise in seiner Lagerposition und wird nicht bewegt.

Zur Detektion einer Auslenkung des Taststiftlagers ist vorteilhafterweise eine kleine Antastbewegung des Taststifts, bzw. eine vergleichsweise kleine Antastkraft, welche auf die Taststiftaufnahme wirkt, notwendig und insbesondere ausreichend. Beispielsweise wird bei einer normalen Nutzung des Tastfühlers hauptsächlich die Membran verformt und das Taststiftlager der Taststiftaufnahme verbleibt unbewegt in einer Ruheposition am Gehäuse.

Auch erweist es sich als vorteilhaft, dass die Taststifthalterung einstückig ausgebildet ist. Beispielsweise sind das Taststiftlager, die Membran und die Taststiftaufnahme einstückig ausgebildet. Denkbar ist auch, dass die Taststifthalterung dreiteilig ausgeführt ist und aus dem Taststiftlager, der Membran und der Taststiftaufnahme zusammengesetzt vorhanden ist. Z.B. ist die Taststifthalterung aus einem Metall und/oder einem Kunststoff ausgebildet.

Weiter wird vorgeschlagen, dass die Membran metallisch vorhanden ist.

Beispielsweise ist die Membran aus einem Metall, insbesondere einer metallischen Legierung hergestellt. Denkbar ist allerdings auch, dass die Membran aus einem Kunststoff hergestellt ist. Bspw. umfasst der Kunststoff metallische Elemente. Vorteilhafterweise ist die Membran fest, insbesondere unlösbar mit der Taststiftaufnahme und/oder dem Taststiftlager verbunden. Beispielsweise ist die Membran mit der Taststiftaufnahme und/oder dem Taststiftlager verklebt. Denkbar ist auch, dass die Membran an der Taststiftaufnahme und/oder am Taststiftlager geklemmt vorhanden ist.

Überdies ist es vorteilhaft, dass der Tastfühler eine Lichtquelle, Sensormittel, sowie ein erstes reflektierendes Element umfasst, wobei das erste reflektierende Element im Bereich der Taststifthalteraufnahme der Taststifthalterung angeordnet ist.

Bevorzugterweise ist das erste reflektierende Element derart im Gehäuse vorhanden, um einen Lichtstrahl der Lichtquelle zu den Sensormitteln zu lenken. Beispielsweise ist das erste reflektierende Element an die Taststifthalterung geklebt und/oder geklemmt.

Unter einem Lichtstrahl ist beispielsweise elektromagnetisches Licht zu verstehen, insbesondere elektromagnetisches Licht aus dem infraroten Spektrum, dem sichtbaren Spektrum und/oder dem ultravioletten Spektrum.

Vorteilhafterweise umfasst der Tastfühler weitere optische Mittel, welche dazu ausgebildet sind, einen Lichtstrahl der Lichtquelle zu beeinflussen, z.B. Linsenelemente und/oder Spiegelelemente. Beispielsweise können die optischen Mittel dazu ausgebildet sein, den Lichtstrahl zu formen oder eine Fokus bzw. einen Brennpunkt zu verändern, z.B. zu verschieben. Insbesondere sind die optischen Mittel derart ausgebildet, dass eine Lichtstrahlform im Bereich der Sensormittel formbar bzw. definierbar ist. Denkbar ist auch, dass die optischen Mittel Strahlteiler umfassen.

Das erste reflektierende Element ist beispielsweise als ein Spiegel vorhanden. Vorteilhafterweise ist das erste reflektierende Element dazu ausgebildet das elektromagnetische Licht der Lichtquelle zu reflektieren. Denkbar ist weiterhin, dass das erste reflektierende Element dazu ausgestaltet ist den Lichtstrahl, welcher von der Lichtquelle ausgeht, zu formen. Die Lichtquelle ist vorteilhafterweise eine LaserLichtquelle, z.B. in Form einer Laserdiode. Das erste reflektieren Element kann dazu ausgebildet sein, den Lichtstrahl, bspw. einen Laserlichtstrahl, zu verändern, z.B. eine Mode des Laserlichtstrahls zu modulieren.

Der insbesondere optische Weg des Lichtstrahls der Lichtquelle verläuft z.B. von der Lichtquelle über ggf. optische Mittel zum ersten reflektierenden Element. Am ersten reflektierenden Element wird der Lichtstrahl in Richtung Sensormittel, insbesondere auf die Sensormittel reflektiert.

Die Sensormittel umfassen zum Beispiel einen Photodetektor. Beispielsweise ist ein Sensormittel als Photodiode ausgestaltet, insbesondere sind die Sensormittel als Quadranten-Photodioden vorhanden. Eine Quadranten-Photodiode besteht aus vier quadratischen Photodioden, welche in einem Quadrat zueinander positioniert sind. Die Funktion der Quadranten-Photodiode ist derart, dass die Intensität der Lichteinstrahlung auf allen vier Photodioden gemessen wird. Ändert sich die Intensitätsverteilung der Lichteinstrahlung auf den vier Photodioden, so hat sich der Lichtstrahl z.B. bewegt oder verändert.

In einer vorteilhaften Modifikation weist der Tastfühler ein zweites reflektierendes Element am Gehäuse auf, wobei ein Lichtstrahl der Lichtquelle entlang seines optischen Weges zu den Sensormitteln am ersten und am zweiten reflektierenden Element reflektiert wird.

Das zweite reflektierende Element ist beispielsweise als ein Spiegel vorhanden. Vorteilhafterweise ist das zweite reflektierende Element dazu ausgebildet das elektromagnetische Licht der Lichtquelle zu reflektieren. Denkbar ist weiterhin, dass das zweite reflektierende Element dazu ausgestaltet ist den Lichtstrahl, welcher von der Lichtquelle ausgeht, zu formen. Das zweite reflektieren Element kann dazu ausgebildet sein, den Lichtstrahl zu verändern, z.B. eine Mode des Laserlichtstrahls zu modulieren.

Durch das zweite reflektierende Element ist es möglich den insbesondere optischen Weg des Lichtstrahls zu verlängern, indem das erste und das zweite reflektierende Element derart zueinander positioniert sind, dass der Lichtstrahl zwischen dem ersten und dem zweiten Element mehrfach reflektiert wird. Beispielsweise wird der Lichtstrahl zunächst am ersten reflektierenden Element in Richtung des zweiten reflektierenden Elements reflektiert und vom zweiten reflektierenden Element wieder zurück zum ersten reflektierenden Element reflektiert, dies ggf. mehrmals, um dann abschließend vom ersten reflektierenden Element in Richtung Sensormittel gelenkt zu werden. Hierdurch ist der Lichtstrahl, z.B. eine Lichtstrahllänge von der Lichtquelle zu den Sensormitteln, vorteilhafterweise verlängert. Dadurch ist eine Auflösung des Tastfühlers verbessert.

Das erste und das zweite reflektierende Element besitzen insbesondere keine Strahlteilungsfunktion. Das erste und das zweite reflektierende Element sind damit insbesondere nicht als Strahlteiler ausgebildet. Das erste und das zweite reflektierende Element sind beispielsweise derart ausgebildet, dass sie jeweils mehr als 70 % des auftreffenden Lichts reflektieren, insbesondere mehr als 80 % oder mehr als 90 %, insbesondere mehr als 95 % des auftreffenden Lichts.

Überdies ist es von Vorteil, dass das erste und das zweite reflektierende Element in einer Weise im Gehäuse angeordnet sind, dass der Lichtstrahl der Lichtquelle entlang seines insbesondere optischen Weges zu den Sensormitteln mehrfach reflektiert wird. Vorteilhafterweise wird der Lichtstrahl zwischen dem ersten und dem zweiten reflektierenden Element mehrfach reflektiert.

Durch die Mehrfachreflexion des Lichtstrahls ist eine Ablenkung, insbesondere eine Ablenkungsstrecke, des Lichtstrahls auf einer Detektionsfläche der Sensormittel vergleichsweise vergrößert, wenn die Taststifthalterung aus ihrer Ruhelage bewegt ist.

Vorteilhafterweise wird der Lichtstrahl zwischen dreimal und dreiunddreißigmal, zwischen dreimal und neunzehnmal oder zwischen dreimal und elfmal, insbesondere zwischen dem ersten und dem zweiten reflektierenden Element, mehrfachreflektiert. Beispielsweise wird der Lichtstrahl dreimal, fünfmal, neunmal, elfmal, insbesondere siebenmal, z.B. zwischen dem ersten und dem zweiten reflektierenden Element, reflektiert.

Weiter wird vorgeschlagen, dass das zweite reflektierende Element positionsfest im Gehäuse des Tastfühlers vorhanden ist. Bevorzugterweise ist das zweite reflektierende Element fest, insbesondere unbeweglich im Gehäuse des Tastfühlers vorhanden. Als vorteilhaft erweist sich auch, dass das erste reflektierende Element positionsfest an der Taststifthalterung angeordnet ist.

Überdies ist es von Vorteil, dass Einstellmittel zur Einstellung einer Position des ersten und/oder des zweiten reflektierenden Elements vorhanden sind.

Die Einstellmittel sind beispielsweise als eine Einstellschraube und/oder als ein piezoelektrisches Element vorhanden. Vorteilhafterweise ist eine Position des zweiten reflektierenden Elements am Gehäuse einstellbar. Vorstellbar ist auch, dass eine Position des ersten reflektierenden Elements relativ zur Taststifthalterung an der Taststifthalterung einstellbar ist. Hierdurch ist eine Justage bzw. eine Einstellung des optischen Weges des optischen Systems bestehend aus zumindest der Lichtquelle, dem reflektierenden ersten und zweiten Element, sowie den Sensormitteln möglich.

Als vorteilhaft erweist sich auch, dass eine Oberflächennormale einer Reflexionsfläche des ersten reflektierenden Elements zumindest annähernd parallel zu einer Längsachse des Gehäuses vorhanden ist. Bevorzugterweise ist die Längsachse des Gehäuses parallel zu einer Längsachse eines an den Tastfühler anordenbaren Taststifts im angeordneten Zustand des Taststifts vorhanden. Insbesondere fallen die beiden Längsachsen zusammen.

Hierdurch ist die Justage des optischen Weges, insbesondere des optischen Systems vergleichsweise vereinfacht.

Denkbar ist auch, dass die Oberflächennormale der Reflexionsfläche des ersten reflektierenden Elements zumindest annähernd senkrecht zu einer Längsachse des Gehäuses ausgebildet ist.

Vorteilhafterweise ist ein Oberflächennormale einer Reflexionsfläche des zweiten reflektierenden Elements zumindest annähernd parallel zu einer Längsachse des Gehäuses vorhanden. Vorstellbar ist auch, dass die Oberflächennormale der Reflexionsfläche des zweiten reflektierenden Elements zumindest annähernd senkrecht zu einer Längsachse des Gehäuses ausgebildet ist.

Bei einer weiteren vorteilhaften Ausgestaltung des Tastfühlers ist eine reflektierende Oberfläche des ersten und/oder zweiten reflektierenden Elements eben oder planar ausgestaltet.

Das erste und/oder das zweite reflektierende Element ist z.B. als planer bzw. planparalleler Spiegel vorhanden. Denkbar ist auch, dass das erste und/oder das zweite reflektierende Element eine reflektierende Oberfläche aufweist, welche in Sektionen unterteilt ist, z.B. ist die reflektierende Oberfläche wabenartig oder facettenartig unterteilt. Vorstellbar ist nun, dass die Waben oder die Facetten einen unterschiedlichen Oberflächenverlauf zueinander aufweisen. Vorteilhafterweise sind die Waben oder die Facetten identisch ausgebildet. Beispielsweise ist eine Oberfläche einer Wabe oder einer Facette konkav ausgebildet.

Auch ist es von Vorteil, dass die reflektierende Oberfläche des ersten und/oder des zweiten reflektierenden Elements eine Krümmung aufweist.

Beispielsweise ist die Reflexionsfläche des ersten und/oder des zweiten reflektierenden Elements konkav ausgeformt. Die Reflexionsfläche ist beispielsweise als konkave Sphäre oder als konkave ellipsoide Oberfläche vorhanden. Vorstellbar ist auch, dass die optische Oberfläche des ersten und/oder des zweiten reflektierenden Elements eine optische, vorteilhaft eine optisch aktive Mikrostruktur und/oder eine optische bzw. optisch aktive Nanostruktur umfasst. Die Nanostruktur kann beispielsweise schmutzabweisend ausgebildet sein, insbesondere ist die Nanostruktur derart ausgebildet, dass die Reflexionsfläche hydrophob und/oder oleophob ist. Hierdurch ist die Reflexionsfläche z.B. selbstreinigend vorhanden.

### Beschreibung des Ausführungsbeispiels

Ein Ausführungsbeispiel wird anhand nachstehender schematischer Zeichnungen unter Angabe weiterer Einzelheiten und Vorteile näher erläutert.

Es zeigen:
- Figur 1:: In einer seitlichen Ansicht einen Querschnitt durch einen erfindungsgemäßen Tastfühlers,
- Figur 2:: Eine perspektivische Ansicht von seitlich oben auf eine Taststifthalterung, welche mittels einer Ruhelagemechanik an einem Gehäuseabschnitt gelagert ist.

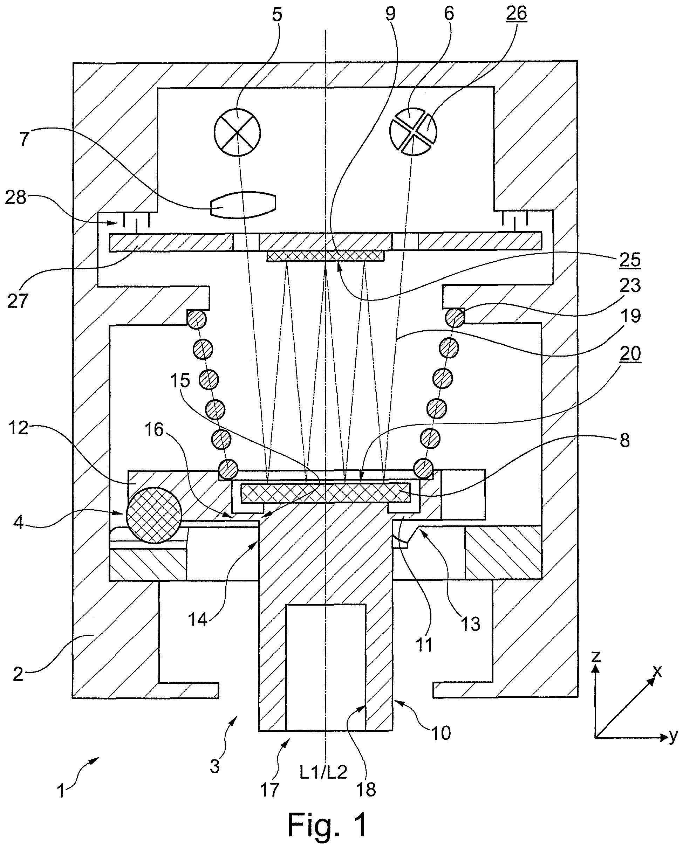

Ein erfindungsgemäßer Tastfühler 1 umfasst ein Gehäuse 2, eine Taststifthalterung 3 und eine Ruhelagemechanik 4, mittels welcher die Taststifthalterung 3 beweglich am Gehäuse 2 gelagert ist. Weiter umfasst der Tastfühler 1 eine Lichtquelle in Form einer Laserdiode 5, Sensormittel 6, ein optisches Linsenelement in Form einer Linse 7, insbesondere einer Transmissionslinse, ein erstes reflektierendes Element in Form eines ersten Spiegels 8 und ein zweites reflektierendes Element in Form eines zweiten Spiegels 9 (Figur 1). Zum Verständnis der Ausrichtung und Auslenkung der einzelnen Elemente des Tastfühlers 1 ist in Figur 1 ein Koordinatensystem eingezeichnet.

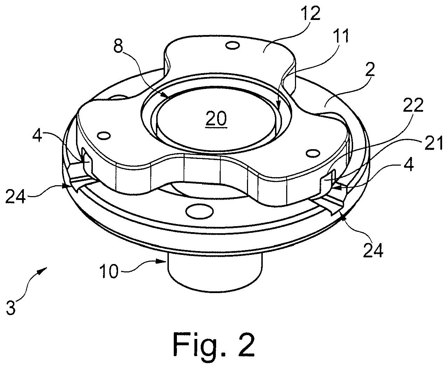

Die Taststifthalterung 3 umfasst eine hülsenartige Taststiftaufnahme 10, eine Membran 11, sowie ein Taststiftlager 12. Am oberen Ende 13 der hülsenartigen Taststiftaufnahmen 10 ist z.B. radial an einem äußeren Umfang 14 die Membran 11 vorhanden. Die Membran 11 ist vorteilhafterweise als ringförmiges, plättchenartiges Bauteil insbesondere rotationssymmetrisch ausgestaltet. Die Membran 11 ist beispielsweise mit einer radial innenliegenden Seite 15 insbesondere direkt anliegend am äußeren Umfang 14 der Taststiftaufnahmen 10 vorhanden. Mit einer der radial innenliegenden Seite 15 gegenüberliegend ausgebildeten, radial außenliegenden Seite 16 steht die Membran 11 insbesondere direkt am Taststiftlager 12 an. Vorteilhafterweise sind das Taststiftlager 12, die Membran 11 und die Taststiftaufnahme 10 einstückig ausgebildet (Figur 2).

An einem unteren Ende 17 der hülsenartigen Taststiftaufnahme 10 ist ein Taststift (nicht gezeigt) anordenbar. Hierzu umfasst die Taststiftaufnahme 10 beispielsweise ein Innengewinde 18. Am, dem unteren Ende 17 gegenüberliegend vorhandenen, oberen Ende 13 ist der erste Spiegel 8 vorhanden. Beispielsweise ist der erste Spiegel 8 mittels eines Klebers am oberen Ende 13 positionsfest, z.B. unlösbar angeordnet. Hierdurch wird bei einer Auslenkung der Taststiftaufnahme 10 der erste Spiegel 8 ebenfalls ausgelenkt. Vorteilhafterweise wird der erste Spiegel 8 aus seiner Ruheposition ausgelenkt sobald sich die Taststiftaufnahme 10 aus ihrer Ruheposition bewegt, insbesondere auch bei einer vergleichsweise kleinen Bewegung der Taststiftaufnahme 10, welche insb. ausschließlich zu einer Verformung der Membran 11 führt.

Der erste Spiegel 8 ist z.B. als insbesondere runder Planspiegel ausgebildet und besitzt eine optische Reflexionsfläche 20. Eine Oberflächennormale der Reflexionsfläche 20 des ersten Spiegels 8 ist vorteilhafterweise parallel zu einer Längsachse L1 der Taststifthalterung 3 bzw. der Taststiftaufnahme 10 ausgerichtet. Hierdurch ist eine Justage eines optischen Wegs eines Lichtstrahls 19 der Laserdiode 5 vergleichsweise verbessert.

Die Ruhelagemechanik 4 ist z.B. als eine Drei-Punkt-Auflage ausgestaltet, wobei ein Auflagebereich aus einer Kugel 21 besteht, welche in einer V-Nut 24 des Gehäuses 2 beweglich gelagert ist. Die Kugel 21 ist z.B. in einer Aussparung 22 des Taststiftlagers 12 befestigt, zum Beispiel angeklebt. Das Taststiftlager 12 ist aus einer Draufsicht betrachtet kleeblattartig vorhanden. In den Figuren 1 und 2 ist die Taststifthalterung 3 in einer nicht ausgelenkten, nicht bewegten Position, einer Ruheposition, am Gehäuse 2 dargestellt.

Damit das Taststiftlager 12 bei einer Auslenkung der Taststifthalterung 3 und damit z.B. des Taststiftlagers 12 in die Ruheposition zurückkehrt, ist das Taststiftlager 12 über eine Schraubenfeder 23, insbesondere in bekannter Weise, an der Ruheposition vorgespannt. Die Schraubenfeder 23 drückt dabei das Taststiftlager 12 Richtung V-Nut 24 am Gehäuse 2. Eine Druckkraft der Schraubenfeder 23 auf das Taststiftlager 12 ist insbesondere parallel zu einer Längsachse L2 des Gehäuses 2 ausgebildet, wobei in der Ruhelage die Längsachse L2 des Gehäuses 2 vorteilhafterweise auf die Längsachse L1 der Taststifthalterung 3 fällt oder zumindest parallel zu dieser ausgerichtet ist.

Der zweite Spiegel 9 ist vorteilhafterweise ebenfalls als Planspiegel vorhanden. Eine Oberflächennormale einer Reflexionsfläche 25 des zweiten Spiegels 9 ist beispielsweise parallel zur Längsachse L2 des Gehäuses 2 am Gehäuse 2 ausgerichtet. Vorteilhafterweise sind der erste und der zweite Spiegel 8, 9 sich gegenüberliegend am Gehäuse 2 vorhanden. Hierdurch ist es möglich, dass der Lichtstrahl 19 auf seinem optischen Weg von der Laserdiode 5 zu den Sensormitteln 6 zwischen den beiden Spiegeln 8, 9 mehrfach reflektiert wird. In Figur 1 ist gezeigt, dass der Lichtstrahl 19 bspw. siebenmal zwischen den beiden Spiegel 8, 9 reflektiert ist, viermal am ersten Spiegel 8 und dreimal am zweiten Spiegel 9. Vorteilhafterweise trifft der Lichtstrahl 19 von der Laserdiode 5 kommend zuerst auf den ersten Spiegel 8 und wird an diesem reflektiert, bevor er auf den zweiten Spiegel 9 trifft, um dort ebenfalls reflektiert zu werden. Ebenfalls ist es von Vorteil, wenn der Lichtstrahl 19 auf seinem Weg zu den Sensormitteln 6 am ersten Spiegel 8 derart reflektiert wird, dass er ausgehend vom ersten Spiegel 8 in Richtung der Sensormittel 6 gelenkt ist.

Befindet sich die Taststifthalterung in der Ruheposition, ist der Lichtstrahl 19 insbesondere auf einer Detektorfläche 26 der Sensormittel 6 ebenfalls in einer Ruheposition, z.B. in einer Nulllage. Vorteilhafterweise ist die Nulllage in einem mittleren Bereich der Detektorfläche 26 vorhanden. Wird der Lichtstrahl 19 beispielsweise, wie in Figur 1 gezeigt, viermal am ersten Spiegel 8 reflektiert und die Taststifthalterung 3 aus ihrer Ruhelage bewegt, so entspricht eine Winkelabweichung des Lichtstrahls 19 relativ zur Ruheposition z.B. der vierfachen Winkelabweichung, welche der erste Spiegel 8 aufgrund der Auslenkung der Taststifthalterung 3 aus der Ruhelage erfährt. Hierdurch ist eine Messempfindlichkeit vergleichsweise verbessert. Auch eine Auslenkung der Taststifthalterung 3 in einer Z-Richtung, parallel zur Längsachse L2, ist durch diese Anordnung vorteilhafterweise detektierbar.

Der zweite Spiegel 9 ist am Gehäuse 2 vorteilhafterweise auf einer Einstellplatte 27 insbesondere positionsfest angeordnet. Die Position der Einstellplatte 27 im Gehäuse 2 ist z.B. relativ zum Gehäuse 2 mittels einer Einstellschraube 28 justierbar. Durch die Einstellschraube 28 ist beispielsweise ein Abstand des ersten Spiegels 8 zum zweiten Spiegel 9 einstellbar. Auch ist es vorstellbar, dass die beiden Spiegel 8 und 9 mittels Einstellmitteln der Einstellplatte 27 derart zueinander positionierbar, z.B. kippbar oder neigbar, sind, dass die beiden insbesondere planen Reflexionsflächen 20, 25 des ersten und des zweiten Spiegels 8, 9 insbesondere in der Ruhelage zueinander parallel vorhanden sind. Denkbar ist auch, dass durch die Justierbarkeit der Einstellplatte 27 optische Achsen der Reflexionsflächen 20, 25 des ersten und des zweiten Spiegel 8, 9 insbesondere in der Ruhelage zueinander parallel ausgerichtbar sind, insbesondere, dass die optischen Achsen aufeinander fallen.

### Bezugszeichenliste

- 1: Tastfühler
- 2: Gehäuse
- 3: Taststifthalterung
- 4: Ruhelagemechanik
- 5: Laserdiode
- 6: Sensormittel
- 7: Linse
- 8: Spiegel
- 9: Spiegel
- 10: Taststiftaufnahme
- 11: Membran
- 12: Taststiftlager
- 13: Ende
- 14: Umfang
- 15: Seite
- 16: Seite
- 17: Ende
- 18: Innengewinde
- 19: Lichtstrahl
- 20: Reflexionsfläche
- 21: Kugel
- 22: Aussparung
- 23: Schraubenfeder
- 24: V-Nut
- 25: Reflexionsfläche
- 26: Detektorfläche
- 27: Einstellplatte
- 28: Einstellschraube

## Patentansprüche

1. Tastfühler (1) mit einem Gehäuse (2) und einer Taststifthalterung (3), wobei die Taststifthalterung (3) ein Taststiftlager (12) und eine Taststiftaufnahme (10) umfasst, wobei die Taststiftaufnahme (10) dazu vorgesehen ist, einen Taststift aufzunehmen, wobei die Taststifthalterung (3) mittels des Taststiftlagers (12) am Gehäuse (2) beweglich gelagert ist, wobei die Taststifthalterung (3) eine elastische Membran (11) aufweist, wobei die Membran (11) zwischen der Taststiftaufnahme (10) und dem Taststiftlager (12) der Taststifthalterung (3) ausgebildet ist, wobei die Membran (11) die Taststiftaufnahme (10) mit dem Taststiftlager (12) verbindet, sodass eine Messempfindlichkeit des Tastfühlers (1) bei einer radialen Antastung aus jeder Richtung gleich ist,
**dadurch gekennzeichnet, dass**
die Taststifthalterung (3) einstückig ausgebildet ist.

2. Tastfühler (1) nach einem der vorangegangenen Ansprüche, **dadurch gekennzeichnet, dass** die Membran (11) rotationssymmetrisch ausgebildet ist.

3. Tastfühler (1) nach einem der vorangegangenen Ansprüche, **dadurch gekennzeichnet, dass** die Membran (11) derart ausgebildet ist, dass sie sich bei einer Bewegung der Taststiftaufnahme (10) relativ zum Gehäuse (2) verformt.

4. Tastfühler (1) nach einem der vorangegangenen Ansprüche, **dadurch gekennzeichnet, dass** die Membran (11) eine Bewegung der Taststiftaufnahme (10) von einer Bewegung des Taststiftlagers (12) entkoppelt.

5. Tastfühler (1) nach einem der vorangegangenen Ansprüche, **dadurch gekennzeichnet, dass** die Membran (11) metallisch vorhanden ist.

6. Tastfühler (1) nach einem der vorangegangenen Ansprüche, **dadurch gekennzeichnet, dass** der Tastfühler (1) eine Lichtquelle (5), Sensormittel (6), sowie ein erstes reflektierendes Element (8) umfasst, wobei das erste reflektierende Element (8) im Bereich der Taststifthalteraufnahme (10) der Taststifthalterung (3) angeordnet ist.

7. Tastfühler (1) nach dem vorangegangenen Anspruch 6, **dadurch gekennzeichnet, dass** der Tastfühler (1) ein zweites reflektierendes Element (9) am Gehäuse (3) aufweist, wobei ein Lichtstrahl (19) der Lichtquelle (5) entlang seines optischen Weges zu den Sensormitteln (6) am ersten und am zweiten reflektierenden Element (8, 9) reflektiert wird.

8. Werkzeugmaschine und/oder Messmaschine mit einem Tastfühler (1) nach einem der vorangegangen Ansprüche.

## Claims

1. Touch probe (1) having a housing (2) and a stylus holder (3), wherein the stylus holder (3) comprises a stylus mount (12) and a stylus receptacle (10), wherein the stylus receptacle (10) is provided for receiving a stylus, wherein the stylus holder (3) is mounted movably at the housing (2) by means of the stylus mount (12), wherein the stylus holder (3) has an elastic membrane (11), wherein the membrane (11) is formed between the stylus receptacle (10) and the stylus mount (12) of the stylus holder (3), wherein the membrane (11) connects the stylus receptacle (10) to the stylus mount (12), with the result that a measurement sensitivity of the touch probe (1) for radial probing is the same from every direction, **characterized in that**
the stylus holder (3) is formed in one piece.

2. Touch probe (1) according to the preceding claim, **characterized in that** the membrane (11) is formed to be rotationally symmetric.

3. Touch probe (1) according to either of the preceding claims, **characterized in that** the membrane (11) is embodied such that it deforms in the case of a movement of the stylus receptacle (10) relative to the housing (2) .

4. Touch probe (1) according to one of the preceding claims, **characterized in that** the membrane (11) decouples a movement of the stylus receptacle (10) from a movement of the stylus mount (12).

5. Touch probe (1) according to one of the preceding claims, **characterized in that** the membrane (11) present is metallic.

6. Touch probe (1) according to one of the preceding claims, **characterized in that** the touch probe (1) comprises a light source (5), sensor means (6) and a first reflective element (8), wherein the first reflective element (8) is arranged in the region of the stylus receptacle (10) of the stylus holder (3).

7. Touch probe (1) according to the preceding Claim 6, **characterized in that** the touch probe (1) has a second reflective element (9) at the housing (2), wherein a light beam (19) from the light source (5) is reflected at the first and at the second reflective element (8, 9) along its optical path to the sensor means (6).

8. Machine tool and/or measurement machine having a touch probe (1) according to one of the preceding claims.

## Revendications

1. Palpeur (1), comprenant un boîtier (2) et un support de stylet (3), le support de stylet (3) comprenant un palier de stylet (12) et un logement de stylet (10), le logement de stylet (10) étant prévu pour recevoir un stylet, le support de stylet (3) étant monté mobile sur le boîtier (2) au moyen du palier de stylet (12), le support de stylet (3) présentant une membrane élastique (11), la membrane (11) étant réalisée entre le logement de stylet (10) et le palier de stylet (12) du support de stylet (3), la membrane (11) reliant le logement de stylet (10) au palier de stylet (12) de sorte que pour un palpage radial, une sensibilité de mesure du palpeur (1) est identique de toutes les directions,
**caractérisé en ce que** le support de stylet (3) est réalisé d'un seul tenant.

2. Palpeur (1) selon l'une quelconque des revendications précédentes, **caractérisé en ce que** la membrane (11) est réalisée à symétrie de révolution.

3. Palpeur (1) selon l'une quelconque des revendications précédentes, **caractérisé en ce que** la membrane (11) est réalisée de telle sorte qu'elle se déforme par rapport au boîtier (2) en cas de mouvement du logement de stylet (10).

4. Palpeur (1) selon l'une quelconque des revendications précédentes, **caractérisé en ce que** la membrane (11) désolidarise un mouvement du logement de stylet (10) d'un mouvement du palier de stylet (12).

5. Palpeur (1) selon l'une quelconque des revendications précédentes, **caractérisé en ce que** la membrane (11) existe sous forme métallique.

6. Palpeur (1) selon l'une quelconque des revendications précédentes, **caractérisé en ce que** le palpeur (1) comprend une source de lumière (5), des moyens de capteur (6), ainsi qu'un premier élément réfléchissant (8), le premier élément réfléchissant (8) étant disposé au niveau du logement de stylet (10) du support de stylet (3).

7. Palpeur (1) selon la revendication précédente 6, **caractérisé en ce que** le palpeur (1) présente un deuxième élément réfléchissant (9) sur le boîtier (2), un rayon lumineux (19) de la source de lumière (5) étant réfléchi sur le premier et le deuxième élément réfléchissant (8, 9) le long de son trajet optique jusqu'aux moyens de capteur (6).

8. Machine-outil et/ou machine de mesure comprenant un palpeur (1) selon l'une quelconque des revendications précédentes.
